# EUROPÄISCHE PATENTSCHRIFT

(11) **EP 2 500 185 B1**
(45) Veröffentlichungstag und Bekanntmachung des Hinweises auf die Patenterteilung: **14.01.2015**
(21) Anmeldenummer: 12158357.9
(22) Anmeldetag: 07.03.2012
(51) Int. Cl.: B60C 1/00, C08L 9/00, C08L 75/04, C08G 18/28, C08L 9/06

(54) **Kautschukmischung**
Rubber compound
Mélange de caoutchouc

(30) Priorität: 16.03.2011 DE 102011001303
(43) Veröffentlichungstag der Anmeldung: 19.09.2012
(73) Patentinhaber: Continental Reifen Deutschland GmbH, 30165 Hannover (DE)
(72) Erfinder: Weinreich, Hajo, Dr., 31552 Apelern (DE); De Risi, Francesca, Dr., 30161 Hannover (DE); Meissner, Steffi, 31552 Rodenberg (DE)
(74) Vertreter: Finger, Karsten

(56) Entgegenhaltungen:
- EP-A1- 1 529 788
- EP-A1- 1 550 704
- WO-A1-2006/118766
- JP-A- 2011 021 071

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugreifen, Gurte, Riemen und Schläuche sehr hohe Anforderungen gestellt.

Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften, bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich. Diese Eigenschaften sind auch bei technischen Gummiartikeln, wie Gurte, Riemen und Schläuche, ein wichtiges Qualitätskriterium.

Ein unverzichtbarer Bestandteil bei der Verarbeitung von Kieselsäure in einer Kautschukmischung ist Silan. Das Silan reagiert während des Mischprozesses mit der Kieselsäure und ist für die physikalischen Eigenschaften der Kautschukmischung mitverantwortlich, da dadurch die Kieselsäure in die Polymermatrix eingebunden wird. Besonders die Eigenschaften Abrieb und Rollwiderstand werden so positiv beeinflusst, dies allerdings in der Regel zu Lasten der Nassgriffeigenschaften.

Die weitere Optimierung des Zielkonfliktes zwischen Nassgriffeigenschaften und Rollwiderstandsverhalten von Kautschukmischungen, insbesondere für Fahrzeugreifen, Gurte, Riemen und Schläuche, ist daher die Aufgabe der vorliegenden Erfindung. Gleichzeitig sollen die weiteren physikalischen Eigenschaften auf einem ähnlichen Niveau verbleiben.

Unter dem Begriff Fahrzeugreifen werden in der vorliegenden Schrift Fahrzeugluftreifen, Vollgummireifen und Zweiradreifen verstanden.

Gelöst wird diese Aufgabe durch eine Kautschukmischung mit folgender Zusammensetzung:
- zumindest einen Dienkautschuk und
- zumindest einen Füllstoff und
- zumindest ein Silan-terminiertes Polyurethan (STP) und
- weitere Zusatzstoffe.

Überraschenderweise wurde gefunden, dass durch die Kombination von zumindest einem Dienkautschuk mit zumindest einem Füllstoff und zumindest einem Silan-terminierten Polyurethan (STP) sich der Zielkonflikt zwischen Nassgriff und Rollwiderstand signifikant verbessern lässt.

Dies gilt nicht nur für den Fahrzeuglaufstreifen, sondern auch für alle anderen Bauteile eines Reifens oder Gummiartikels. Die Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die erfindungsgemäße Kautschukmischung in der Mischungsentwicklung für Riemen, Gurte und Schläuche. Diese technischen Gummiartikel finden im täglichen Leben überall Verwendung, z.B. in Aufzügen, in der Automobilindustrie, in der Rohstoffindustrie, in der Lebensmittelindustrie und in der Medizintechnik. Daher kommt auch hier den Eigenschaften Rollwiderstand und Nassgriff, vor allem im Außeneinsatz, besondere Bedeutung zu.

Die Kautschukmischung enthält zumindest einen Dienkautschuk. Der Dienkautschuk ist dabei ausgewählt aus der Gruppe, bestehend aus natürlichem Polyisopren und / oder synthetischem Polyisopren und / oder Butadien-Kautschuk und / oder Styrolbutadienkautschuk und / oder lösungspolymerisiertem Styrolbutadienkautschuk und /oder emulsionspolymerisiertem Styrolbutadienkautschuk, wobei Styrolbutadienkautschuk, insbesondere ein lösungspolymerisierter Styrolbutadienkautschuk, besonders bevorzugt ist. Der Dienkautschuk, insbesondere der Styrolbutadienkautschuk, kann mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert sein. Es kommen aber auch weitere, der fachkundigen Person bekannte, Modifizierungen, auch als Funktionalisierungen bezeichnet, in Frage. Ebenfalls kann der Dienkautschuk teilweise oder vollständig hydriert sein.

Des Weiteren kann die erfindungsgemäße Kautschukmischung noch wenigstens einen weiteren polaren oder unpolaren Kautschuk enthalten.

Der polare oder unpolare Kautschuk ist dabei ausgewählt aus der Gruppe, bestehend aus Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Epichlorhydrinkautschuk und /oder Styrol-Isopren-Butadien-Terpolymer und / oder hydrierter Acrylnitrilbutadienkautschuk und / oder Isopren-Butadien-Copolymer und / oder hydrierter Styrolbutadienkautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.

Verschiedene Anwendungen im Reifen (LaufflächeBody, PKW/LKW) sind mit jeweils unterschiedlichen bevorzugten Kautschukzusammensetzungen verbunden:

### PKW-Laufstreifen:

Die Kautschukmischung enthält bevorzugt zumindest einen Styrol-Butadien-Kautschuk (SBR, vorzugsweise einen lösungspolymerisierten Styrol-Butadien-Kautschuk (SSBR)).

### LKW-Laufstreifen:

Die Kautschukmischung enthält bevorzugt 40 bis 100 phr natürliches Polyisopren und /oder synthetisches Polyisopren, 0 bis 50 phr Butadienkautschuk, 0 bis 60 phr Styrol-Butadien-Kautschuk, vorzugsweise lösungspolymerisierten Styrol-Butadien-Kautschuk.

### Body:

Die Kautschukmischung enthält bevorzugt 20 bis 100 phr natürliches Polyisopren und /oder synthetisches Polyisopren, 0 bis 80 phr Butadienkautschuk, 0 bis 50 phr Styrol-Butadien-Kautschuk.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung enthält des Weiteren zumindest einen Füllstoff, wobei es sich bevorzugt um zumindest einen hellen Füllstoff handelt.

Die Gesamtmenge des Füllstoffs beträgt bevorzugt 1 bis 300 phr, bevorzugt 10 bis 250 phr. Wird die Kautschukmischung im PKW-Laufstreifen verwendet, so beträgt die Füllstoffmenge bevorzugt 40 bis 250 phr, besonders bevorzugt 50 bis 200 phr, ganz besonders bevorzugt 60 bis 150 phr. Bei Verwendung in LKW-Laufstreifen beträgt die Füllstoffmenge bevorzugt 20 bis 100 phr und besonders bevorzugt 25 bis 75 phr, ganz besonders bevorzugt 25 bis 65 phr, während die Menge an Füllstoff für Anwendungen in Body-Mischungen bevorzugt 10 bis 100 phr, bevorzugt 10 bis 75 phr, beträgt.

Bei dem hellen Füllstoff handelt es sich bevorzugt um wenigstens eine Kieselsäure.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Erfindungsgemäß werden Kieselsäuren mit einer Stickstoff-Oberfläche zwischen 80 m²/g und 350 m²/g, bevorzugt zwischen 100 und 300 m²/g, besonders bevorzugt zwischen 110 und 280 m²/g, und einer CTAB-Oberfläche zwischen 80 und 300 m²/g , bevorzugt zwischen 100 und 280 m²/g und besonders bevorzugt zwischen 110 und 260 m²/g, eingesetzt.

Wird Ruß als dunkler Füllstoff verwendet, so werden erfindungsgemäß Ruße mit einer Iod-Absorptionszahl, gemäß ASTM D 1510, von 50 bis 300 g/kg und einer DPB-Zahl von 40 bis 200 cm³/100 g eingesetzt. Die DBP-Zahl gemäß ASTM D 2414 bestimmt das spezifische Absorptionsvolumen eines Rußes oder eines hellen Füllstoffes mittels Dibutylphthalat.

Bevorzugt ist hierbei, wenn lediglich ein Russtyp in der jeweiligen Kautschukmischung verwendet wird, es können aber auch verschiedene Russtypen in die Kautschukmischung eingemischt werden.

Es ist allerdings auch möglich eine Kombination aus Kieselsäure mit den genannten Eigenschaften und Ruß mit den genannten Eigenschaften als wesentliche Füllstoffkomponente zu verwenden.

Die Kautschukmischung kann neben Kieselsäure und Ruß auch noch weitere Füllstoffe wie Aluminiumhydroxid, Schichtsilikate, Kalk, Kreide, Stärke, Magnesiumoxid, Titandioxid, Kautschukgele, Kurzfasern usw. in beliebigen Kombinationen enthalten.

In einer besonderen Ausführungsform weisen jedoch wenigstens 10 phr des Gesamtfüllstoffs Silan-reaktive Gruppen auf der Oberfläche, wie z. B. OH-Gruppen, auf. Dieser Füllstoff kann aus den bekannten Füllstoffen, wie amorphe Kieselsäure, anderen mineralischen Füllstoffen oder modifizierten Polymermikrogelen, z.B. Nanoprene^{®} der Fa. LanXess, ausgewählt werden.

Falls ein Kupplungsagens, in Form von Silan oder einer siliziumorganischen Verbindung, verwendet wird, so beträgt die Menge des Kupplungsagens 0 - 20 phr, bevorzugt 0,1 - 15 phr, besonders bevorzugt 0,5 - 10 phr. Als Kupplungsagenzien können dabei alle der fachkundigen Person für die Verwendung in Kautschukmischungen bekannten verwendet werden. Besonders zu erwähnen sind hierbei Mercaptosilane und hierbei insbesondere solche, welche sich durch eine Reduzierung der leicht flüchtigen organischen Bestandteile auszeichnen, wie sie, beispielhaft für weitere Druckschriften, in DE 10 2005 057 801, WO99/09036, WO2002/048256 und WO2006/015010 zu finden sind. Ebenso besonders zu erwähnen sind schwefelhaltige Silane, wie bspw. Bis(triethoxysilylpropyl)disulfid (TESPD) und Bis(triethoxysilylpropyl)tetrasulfid (TESPT), da diese bedingt durch eine zusätzliche kovalente Verbindung zwischen Füllstoff und Polymer das chemische Netzwerk verstärken und so zusätzlich die Handlingeigenschaften von Fahrzeugreifen verbessern können.

Erfindungswesentlich ist, dass die Kautschukmischung zumindest ein Silan-terminiertes Polyurethan (abgekürzt STP oder auch SPUR) enthält. Silan-terminiertes Polyurethan wird oft auch als silyliertes Polyurethan bezeichnet.

STPs sind eine Klasse von Präpolymere, die die Eigenschaften von Polyurethanen mit denen von Silikonen verbinden. Es handelt sich daher bei den STPs um Polyurethan-Präpolymere mit einem hohen Molekulargewicht, deren Endgruppen mit Silan (Trimethoxysilyl) terminiert sind. Vorzugsweise haben die STP daher trifunktionelle Silan-Endgruppen.

Überraschenderweise hat sich gezeigt, dass durch die Zugabe eines derartigen STP sich nicht nur der Zielkonflikt zwischen Rollwiderstand und Nassgriff entschärfen lässt, sondern die Kautschukmischung gleichzeitig eine weitere signifikante Optimierung der Handlingeigenschaften aufweist.

Die Menge des eingesetzten STP beträgt vorzugsweise 0,1 bis 50 phr, besonders bevorzugt 1 bis 30 phr.

Es können in der Kautschukmischung 0,1 bis 140 phr, bevorzugt 1 bis 80 phr zumindest eines Weichmachers vorhanden sein. Dieser Weichmacher ist bevorzugt ausgewählt aus der Gruppe, bestehend aus Mineralölen und / oder synthetischen Weichmachern und / oder Fettsäuren und / oder Fettsäurederivaten und / oder Harzen und / oder Faktisse und / oder Glyceriden und / oder flüssigen Polymeren und / oder Terpenen und / oder Saatenölen und / oder Biomass-To-Liquid-Ölen und / oder Rubber-To-Liquid-Ölen.

Bei der Verwendung von Mineralöl ist dieses bevorzugt ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Weiterhin enthält die Kautschukmischung noch weitere Zusatzstoffe.

Weitere Zusatzstoffe beinhaltet im Wesentlichen das Vernetzungssystem (Vernetzer, Schwefelspender und / oder elementarer Schwefel, Beschleuniger und Verzögerer), Ozonschutzmittel, Alterungsschutzmittel, Mastikationshilfsmittel, Verarbeitungshilfsmittel und weitere Aktivatoren. Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt

Der Mengenanteil der Gesamtmenge an weiteren Zusatzstoffen beträgt 3 bis 150 phr, bevorzugt 3 bis 100 phr und besonders bevorzugt 5 - 80 phr.

Im Gesamtmengenanteil der weiteren Zusatzstoffe finden sich noch 0,1 - 10 phr, bevorzugt 0,2 - 8 phr, besonders bevorzugt 0,2 - 4 phr, Zinkoxid.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation der Kautschukmischung wird vorzugsweise in Anwesenheit von elementarem Schwefel und / oder Schwefelspendern durchgeführt, wobei einige Schwefelspender zugleich als Vulkanisationsbeschleuniger wirken können. Elementarer Schwefel und / oder Schwefelspender werden im letzten Mischungsschritt in den von der fachkundigen Person gebräuchlichen Mengen (0,1 bis 9 phr Gesamtmenge an Schwefelspender und / oder elementarem Schwefel, wobei elementarer Schwefel bevorzugt in Mengen von 0 bis 6 phr, besonders bevorzugt in Mengen von 0,1 bis 3 phr verwendet wird) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer, die erfindungsgemäß in den obig beschriebenen Zusatzstoffen enthalten sind, und Vulkanisationsaktivatoren, wie obig beschrieben, enthalten.

Der Erfindung liegt weiterhin die Aufgabe zu Grunde, ein Verfahren zur Herstellung einer Kautschukmischung bereitzustellen, die den Zielkonflikt zwischen Nassgriff und Rollwiderstand weiter verbessert, während die weiteren physikalischen Eigenschaften auf einem ähnlichen Niveau verbleiben.

Gelöst wird diese Aufgabe dadurch, dass während des Verfahren zur Herstellung der Kautschukmischung in einer produktiven Mischstufe bei wenigstens 120°C wenigstens ein Silan-terminiertes Polyurethan (STP) hinzugefügt wird. Dieses Vorgehen hat sich hinsichtlich der zu lösenden obigen Aufgabe und hinsichtlich der Optimierung des genannten Zielkonflikts als vorteilhaft erwiesen. Es versteht sich von selbst, dass während des Mischprozesses die Temperatur maximal so hoch gewählt werden darf, dass keine vollständige Vulkanisation während des Mischens auftreten kann. Dies ist jeweils abhängig von der qualitativen und quantitativen Mischungszusammensetzung. Die qualitative und quantitative Mischungszusammensetzung ist jeweils analog zu der bereits obig beschriebenen.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Fahrzeugluftreifen, insbesondere zur Herstellung des Laufstreifens eines Reifens und / oder einer Body-Mischung eines Reifens und zur Herstellung von Riemen, Gurten und Schläuchen zu verwenden.

Bei dem Fahrzeugluftreifen handelt es sich um einen PKW-Reifen oder um einen Nutzfahrzeugreifen, so dass die Kautschukmischung für den Laufstreifen und / oder für eine Body-Mischung eines PKWs oder eines Nutzfahrzeuges Verwendung findet.

Der Begriff Body-Mischung beinhaltet im Wesentlichen Seitenwand, Innenseele, Apex, Gürtel, Schulter, Gürtelprofil, Squeege, Karkasse, Wulstverstärker, weitere Verstärkungseinlagen und / oder Bandage.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen zweigeteilt, so findet die Kautschukmischung bevorzugt Anwendung als Mischung für die Cap.

Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Zur Verwendung der erfindungsgemäßen Kautschukmischung in Schläuchen wird auf die im Handbuch der Kautschuktechnologie, Dr. Gupta Verlag, 2001, Kapitel 13.4 beschriebenen Verfahren verweisen.

Die Erfindung soll nun anhand von Vergleichs- und Ausführungsbeispielen, die in Tabellen 1a, 2a, 3a und 1b, 2b, 3b zusammengefasst sind, näher erläutert werden. In den Tabellen mit der Kennzeichnung "a" sind jeweils die Mischungszusammensetzungen aufgeführt, in den Tabellen mit der Kennzeichnung "b" sind die physikalischen Eigenschaften dieser Mischungen aufgelistet. Die mit "E" gekennzeichneten Mischungen sind hierbei erfindungsgemäße Mischungen, während es sich bei den mit "V" gekennzeichneten Mischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur gemäß DIN 53 505
- Rollwiderstand, dargestellt durch die Rückprallelastizität bei 70°C gemäß DIN 53 512
- Nassgriff, dargestellt durch die Rückprallelastizität bei Raumtemperatur gemäß DIN 53 512
- Verstärkungswert, dargestellt durch den Quotienten der Spannungswerte bei 300 % und bei 50 % Dehnung bei Raumtemperatur gemäß DIN 53 504 (M300% / M50%)
- Steifigkeitswert als Maß für die Handlingeigenschaften, dargestellt durch den Spannungswert bei 300 % Dehnung bei Raumtemperatur gemäß DIN 53 504 bei gleicher Härte

**Tabelle 1a**

| **Bestandteile** | **Einheit** | **V1** | **E1** |
|---|---|---|---|
| SSBR^{a} | phr | 137,5 | 137,5 |
| STP^{b} | phr | -- | 15 |
| Ruß, N121 | phr | 20 | 20 |
| Kleselsäure^{c} | phr | 95 | 95 |
| Silan^{d} | phr | 8,4 | 8,4 |
| Mineralöle | phr | 30 | 15 |
| ZnO | phr | 4 | 4 |
| Schwefel | phr | 1,7 | 1,7 |
| Beschleuniger^{f} | phr | 4,6 | 4,6 |
| Weitere Zusatzstoffe^{g} | phr | 7 | 7 |

| | | | |
|---|---|---|---|
| ^{a} BUNA VSL 2438, mit 37,5 phr Öl verstreckt, Fa Lanxess ^{b} DESMOSEAL S XP 2749, Fa. Bayer ^{c} RP200, Fa. Rhodia ^{d} TESPD ^{e} TDAE ^{f} TBBS, DPG ^{g} Ozonschutzmittel, Stearinsäure | | | |

**Tabelle 1b**

| **Eigenschaften** | **Einheit** | **V1** | **E1** |
|---|---|---|---|
| Härte bei RT | Shore A | 69 | 68 |
| Nassgriff | % | 13,6 | 17,2 |
| Rollwiderstand | % | 34,7 | 41,7 |
| Verstärkung | | 6,68 | 7,13 |
| Steifigkeit | MPa | 8,9 | 11,1 |

Anhand des Ausführungsbeispieles E1 lässt sich deutlich erkennen, dass sich der Zielkonflikt zwischen Nassgriff und Rollwiderstand durch das Vorhandensein von STP in der Kautschukmischung optimieren lässt. Im Vergleich zu der Vergleichsmischung V1 hat die erfindungsgemäße Mischung E1 einen um 7 % verbesserten Rollwiderstand, während der Nassgriff lediglich um etwa 3,6 % schlechter geworden ist.

Überraschenderweise zeigen sich jeweils eine deutliche Verbesserung der Verstärkung (+7 %) und der Handlingeigenschaften (+24,7 %).

**Tabelle 2a**

| **Bestandteile** | **Einheit** | **V2** | **E2** | **E3** |
|---|---|---|---|---|
| SSBR^{a} | phr | 82,5 | 82,5 | 82,5 |
| ESBR^{h} | phr | 55 | 55 | 55 |
| STP^{b} | phr | -- | 15 | 15 |
| Ruß, N121 | phr | 20 | 20 | 20 |
| Kleselsäure^{c} | phr | 95 | 95 | 95 |
| Silan^{d} | phr | 8,4 | 8,4 | 8,4 |
| Mineralöle | phr | 30 | 15 | 15 |
| ZnO | phr | 4 | 4 | 4 |
| Schwefel | phr | 1,7 | 1,7 | 1,7 |
| Beschleuniger^{f} | phr | 4,6 | 4,6 | 4,6 |
| Weitere Zusatzstoffe^{g} | phr | 7 | 7 | 7 |

| | | | | |
|---|---|---|---|---|
| ^{a} BUNA VSL 2438, mit 37,5 phr Öl verstreckt, Fa Lanxess ^{h} ESBR 1739 ^{b} DESMOSEAL S XP 2749, Fa. Bayer ^{c} RP200, Fa. Rhodia ^{d} TESPD ^{e} TDAE ^{f} TBBS, DPG ^{g} Ozonschutzmittel, Stearinsäure | | | | |

**Tabelle 2b**

| **Eigenschaften** | **Einheit** | **V2** | **E2** | **E3** |
|---|---|---|---|---|
| Härte bei RT | Shore A | 69 | 70 | 67 |
| Nassgriff | % | 13,2 | 16,5 | 15,7 |
| Rollwiderstand | % | 35 | 40,4 | 41,4 |
| Verstärkung | | 6,13 | 6,72 | 7,28 |
| Steifigkeit | MPa | 8,3 | 10,3 | 10,6 |

Anhand der Ausführungsbeispiele E2 und E3 lässt sich ebenso deutlich erkennen, dass sich der Zielkonflikt zwischen Nassgriff und Rollwiderstand durch das Vorhandensein von STP in der Kautschukmischung optimieren lässt. Im Vergleich zu der Vergleichsmischung V2 haben die erfindungsgemäßen Mischungen E2 und E3 einen um 5,4 bzw. 6,4 % verbesserten Rollwiderstand, während der Nassgriff lediglich um etwa 3,3 bzw. 2,5 % schlechter geworden ist.

Überraschenderweise zeigen sich ebenso jeweils eine deutliche Verbesserung der Verstärkung (+9 bzw. +18,7 %) und der Handlingeigenschaften (+24 bzw. +27,7 %). Der Unterschied zwischen E2 und E3 besteht darin, dass STP in E2 bereits in der ersten Mischstufe hinzugefügt wurde, während in E3 STP in der zweiten Mischstufe zugefügt wurde. Wie aus Tabelle 2b ersichtlich wird, führ das Hinzufügen von STP in der zweiten Mischstufe zu einer weiteren Verbesserung der physikalischen Eigenschaften der Kautschukmischung.

**Tabelle 3a**

| **Bestandteile** | **Einheit** | **V3** | **E4** | **V4** | **E5** |
|---|---|---|---|---|---|
| SSBR^{a} | phr | -- | -- | 82,5 | 82,5 |
| ESBR^{h} | phr | -- | -- | 55 | 55 |
| NR | phr | 100 | 100 | -- | -- |
| STP^{b} | phr | -- | 15 | -- | 15 |
| Ruß, N121 | phr | 20 | 20 | 115 | 115 |
| Kleselsäure^{c} | phr | 95 | 95 | -- | -- |
| Silan^{d} | phr | 8,4 | 8,4 | -- | -- |
| Mineralöle | phr | 67,5 | 52,5 | 30 | 15 |
| ZnO | phr | 4 | 4 | 4 | 4 |
| Schwefel | phr | 1,7 | 1,7 | 1,7 | 1,7 |
| Beschleuniger^{f} | phr | 4,6 | 4,6 | 2,8 | 2,8 |
| Weitere Zusatzstoffe^{g} | phr | 7 | 7 | 7 | 7 |

| | | | | | |
|---|---|---|---|---|---|
| ^{a} BUNA VSL 2438, mit 37,5 phr Öl verstreckt, Fa Lanxess ^{h} ESBR 1739 ^{b} DESMOSEAL S XP 2749, Fa. Bayer ^{c} RP200, Fa. Rhodia ^{d} TESPD ^{e} TDAE ^{f} TBBS, DPG ^{g} Ozonschutzmittel, Stearinsäure | | | | | |

**Tabelle 3b**

| **Eigenschaften** | **Einheit** | **V3** | **E4** | **V4** | **E5** |
|---|---|---|---|---|---|
| Härte bei RT | Shore A | 67 | 69 | 72 | 74 |
| Nassgriff | % | 24,5 | 25,6 | 11,1 | 13,6 |
| Rollwiderstand | % | 39,9 | 43,3 | 27,5 | 30 |
| Verstärkung | | 6,75 | 6,48 | 5,78 | 5,81 |
| Steifigkeit | MPa | 7,6 | 9,1 | 10,4 | 13,2 |

Anhand der Ausführungsbeispiele E4 und E5 lässt sich wiederum deutlich erkennen, dass sich der Zielkonflikt zwischen Nassgriff und Rollwiderstand durch das Vorhandensein von STP in der Kautschukmischung optimieren lässt. Im Vergleich zu den jeweiligen Vergleichsmischungen V3 und V4 haben die erfindungsgemäßen Mischungen E4 und E5 einen um 3,4 bzw. 3,5 % verbesserten Rollwiderstand, während der Nassgriff lediglich um etwa 1,1 bzw. 2,5 % schlechter geworden ist.

Die Handlingeigenschaften verbessern sich ebenso deutlich um +19,7 bzw. +26,9 %. In E4 und E5 wurde STP analog E3 in der zweiten Mischstufe hinzugefügt.

## Patentansprüche

1. Kautschukmischung, **gekennzeichnet durch** folgende Zusammensetzung:
- zumindest einen Dienkautschuk und
- zumindest einen Füllstoff und
- zumindest ein Silan-terminiertes Polyurethan (STP) und
- weitere Zusatzstoffe,
wobei der Dienkautschuk ausgewählt ist aus der Gruppe, bestehend aus natürlichem Polyisopren und / oder synthetischem Polyisopren und / oder Butadien-Kautschuk und / oder Styrolbutadienkautschuk und / oder lösungspolymerisiertem Styrolbutadienkautschuk und / oder emulsionspolymerisiertem Styrolbutadienkautschuk.

2. Kautschukmischung nach Anspruch 1, **dadurch gekennzeichnet, dass** sie 0,1 bis 50 phr eines Silan-terminierten Polyurethans enthält.

3. Kautschukmischung nach Anspruch 2, **dadurch gekennzeichnet, dass** sie 1 bis 30 phr eines Silan-terminierten Polyurethans enthält.

4. Kautschukmischung nach einem der Ansprüche 1 bis 3, **dadurch gekennzeichnet, dass** der Dienkautschuk ein lösungspolymerisierter Styrolbutadienkautschuk ist.

5. Kautschukmischung nach einem der Ansprüche 1 bis 4, **dadurch gekennzeichnet, dass** der Füllstoff Kieselsäure und / oder Ruß ist.

6. Kautschukmischung nach einem der Ansprüche 1 bis 5, **dadurch gekennzeichnet, dass** sie 1 bis 300 phr Füllstoff enthält.

7. Verwendung einer Kautschukmischung nach einem der Ansprüche 1 bis 6 zur Herstellung eines Pkw-Reifens oder eines Nutzfahrzeugreifens.

8. Verwendung einer Kautschukmischung nach Anspruch 7 zur Herstellung des Laufstreifens eines Pkw-Reifens oder des Laufstreifens eines Nutzfahrzeugreifens oder einer Body-Mischung eines Pkw-Reifens oder einer Body-Mischung eines Nutzfahrzeugreifens.

9. Verwendung einer Kautschukmischung nach einem der Ansprüche 1 bis 8 zur Herstellung eines Gurtes, Riemens oder Schlauches.

10. Verfahren zur Herstellung einer Kautschukmischung nach einem der Ansprüche 1 bis 9, **dadurch gekennzeichnet, dass** in einer produktiven Mischstufe bei wenigstens 120°C wenigstens ein Silan-terminiertes Polyurethan (STP) hinzugefügt wird.

## Claims

1. Rubber mixture, **characterized by** the following composition:
• at least one diene rubber and
• at least one filler and
• at least one silane-terminated polyurethane (STP) and
• other additional substances,
where the diene rubber is selected from the group consisting of natural polyisoprene and/or synthetic polyisoprene and/or butadiene rubber and/or styrene-butadiene rubber and/or solution-polymerized styrene-butadiene rubber and/or emulsion-polymerized styrene-butadiene rubber.

2. Rubber mixture according to Claim 1, **characterized in that** it comprises from 0.1 to 50 phr of a silane-terminated polyurethane.

3. Rubber mixture according to Claim 2, **characterized in that** it comprises from 1 to 30 phr of a silane-terminated polyurethane.

4. Rubber mixture according to any of Claims 1 to 3, **characterized in that** the diene rubber is a solution-polymerized styrene-butadiene rubber.

5. Rubber mixture according to any of Claims 1 to 4, **characterized in that** the filler is silica and/or carbon black.

6. Rubber mixture according to any of Claims 1 to 5, **characterized in that** it comprises from 1 to 300 phr of filler.

7. Use of a rubber mixture according to any of Claims 1 to 6 for the production of a car tyre or of a commercial-vehicle tyre.

8. Use of a rubber mixture according to Claim 7 for the production of the tread of a car tyre or of the tread of a commercial-vehicle tyre or of a body mixture of a car tyre or of a body mixture of a commercial-vehicle tyre.

9. Use of a rubber mixture according to any of Claims 1 to 8 for the production of a drive belt or other belt or hose.

10. Process for the production of a rubber mixture according to any of Claims 1 to 9, **characterized in that** in a productive mixing stage at at least 120°C at least one silane-terminated polyurethane (STP) is added.

## Revendications

1. Mélange de caoutchouc, **caractérisé par** la composition suivante :
- au moins un caoutchouc diénique et
- au moins une charge et
- au moins un polyuréthane à terminaison silane (STP) et
- des additifs supplémentaires,
le caoutchouc diénique étant choisi dans le groupe constitué par le polyisoprène naturel et/ou le polyisoprène synthétique et/ou le caoutchouc de butadiène et/ou le caoutchouc de styrène-butadiène et/ou le caoutchouc de styrène-butadiène polymérisé en solution et/ou le caoutchouc de styrène-butadiène polymérisé en émulsion.

2. Mélange de caoutchouc selon la revendication 1, **caractérisé en ce qu'**il contient 0,1 à 50 pce d'un polyuréthane à terminaison silane.

3. Mélange de caoutchouc selon la revendication 2, **caractérisé en ce qu'**il contient 1 à 30 pce d'un polyuréthane à terminaison silane.

4. Mélange de caoutchouc selon l'une quelconque des revendications 1 à 3, **caractérisé en ce que** le caoutchouc diénique est un caoutchouc de styrène-butadiène polymérisé en solution.

5. Mélange de caoutchouc selon l'une quelconque des revendications 1 à 4, **caractérisé en ce que** la charge est une silice et/ou un noir de carbone.

6. Mélange de caoutchouc selon l'une quelconque des revendications 1 à 5, **caractérisé en ce qu'**il contient 1 à 300 pce de charge.

7. Utilisation d'un mélange de caoutchouc selon l'une quelconque des revendications 1 à 6 pour la fabrication d'un pneu de voiture ou d'un pneu d'utilitaire.

8. Utilisation d'un mélange de caoutchouc selon la revendication 7 pour la fabrication de la bande de roulement d'un pneu de voiture ou de la bande de roulement d'un pneu d'utilitaire ou d'un mélange de corps d'un pneu de voiture ou d'un mélange de corps d'un pneu d'utilitaire.

9. Utilisation d'un mélange de caoutchouc selon l'une quelconque des revendications 1 à 8 pour la fabrication d'une sangle, d'une courroie ou d'un tuyau.

10. Procédé de fabrication d'un mélange de caoutchouc selon l'une quelconque des revendications 1 à 9, **caractérisé en ce qu'**au moins un polyuréthane à terminaison silane (STP) est ajouté lors d'une étape de mélange productive à au moins 120 °C.
